# EUROPÄISCHE PATENTSCHRIFT

(11) **EP 0 791 510 B1**
(45) Veröffentlichungstag und Bekanntmachung des Hinweises auf die Patenterteilung: **24.05.2000**
(21) Anmeldenummer: 96120036.7
(22) Anmeldetag: 13.12.1996
(51) Int. Cl.: B60R 21/22

(54) **Anordnung eines Gasgenerators für einen Fahrzeug-Seitenairbag**
Gas generator arrangement for a vehicle side air bag
Agencement d'un générateur de gaz pour un coussin gonflable latéral de véhicule

(30) Priorität: 20.02.1996 DE 19606157
(43) Veröffentlichungstag der Anmeldung: 27.08.1997
(73) Patentinhaber: Bayerische Motoren Werke Aktiengesellschaft, 80788 München (DE)
(72) Erfinder: Müller, Jürgen, 86860 Jengen (DE)

(56) Entgegenhaltungen:
- DE-A- 3 937 377
- DE-A- 4 209 944
- DE-U- 29 517 953
- DE-U- 29 610 920
- FR-A- 2 141 336

## Beschreibung

Die Erfindung betrifft die Anordnung eines Gasgenerators für einen Fahrzeug-Seitenairbag in einem Hohlraum eines Trägers des beidseitig eine A-Säule aufweisenden Fahrzeuges. Zum bekannten Stand der Technik wird beispielshalber auf die DE 43 07 175 A1 verwiesen.

In dieser genannten Schrift befinden sich die Gasgeneratoren für einen dem Fachmann bekannten Fahrzeug-Seitenairbag in der A-Säule oder in der B-Säule des Kraftfahrzeuges, insbesondere Personenkraftwagens. Diese bekannte Anordnung ist insofern von Vorteil, als sich die Gasgeneratoren nahe des Airbags befinden. Jedoch ist der freie Einbauraum nahe des Seitenairbags äußerst beschränkt, so daß es kaum möglich ist, übliche Gasgeneratoren im genannten Bereich unterzubringen. Daher wird in dieser Schrift vorgeschlagen, die Gasgeneratoren weiter entfernt, das heißt bodennah innerhalb der A-Säule oder B-Säule anzuordnen, und die Gasgeneratoren dann über Leitungen mit den Airbags zu verbinden. Dies macht jedoch eine relativ lange Gasleitung erforderlich, wodurch die Einsatzbereitschaft des Airbags deutlich verzögert wird. Eine demgegenüber verbesserte Anordnung nach dem Oberbegriff des Anspruchs 1 aufzuzeigen ist daher Aufgabe der vorliegenden Erfindung.

Zur Lösung dieser Aufgabe ist vorgesehen, daß der Gasgenerator innerhalb des an den beiden A-Säulen angebundenen Lenksäulen-Trägers angeordnet ist. Vorteilhafte Aus- und Weiterbildungen sind Inhalt der Unteransprüche.

Wird erfindungsgemäß der sogenannte Lenksäulen-Träger, der oft als auch Tragrohr bezeichnet wird, zur Unterbringung des Gasgenerators eines Fahrzeugs-Seitenairbags herangezogen, so geht zum einen kein wertvoller Bauraum verloren, da der Hohlraum dieses Lenksäulen-Trägers bislang nicht genutzt wird. Zum anderen befindet sich auf diese Weise der Gasgenerator relativ nahe des Seitenairbags, da der Lenksäulen-Träger üblicherweise in der Mitte des Fahrzeuges - bezogen auf die Höhe eines Personenkraftwagens - vorgesehen ist. Eine lange Gasführungsleitung vom Gasgenerator zum Seitenairbag ist somit nicht erforderlich, insbesondere wenn der Gasgenerator innerhalb des Endabschnittes dieses Lenksäulen-Trägers angeordnet ist. Neben dem Raumgewinn hat man aber noch dem weiteren Vorteil, das keine zusätzliche Montagetätigkeit erforderlich ist. Vielmehr kann der Gasgenerator vor Montage des Lenksäulen-Trägers, das heißt bevor dieser an den beiden A-Säulen beispielsweise verschraubt wird, einfach in dessen Hohlraum eingesteckt werden. Sind dabei der Endabschnitt des Lenksäulen-Trägers sowie der Gasgenerator in ihren Abmessungen aneinander angepaßt, so ist vorteilhafterweise keine Ummantelung oder kein weiteres Gehäuse für den Gasgenerator erforderlich, vielmehr kann der Gasgenerator auf einfache Weise in den entsprechend angepaßten Hohlraum des Lenksäulen-Trägers eingesteckt werden.

Die im folgenden erläuterte Prinzipskizze zeigt ein bevorzugtes Ausführungsbeispiel der Erfindung. Dabei sind mit der Bezugsziffer 1 die beiden A-Säulen eines Fahrzeuges/Personenkraftwagens bezeichnet, die in ihrem oberen Bereich durch einen Querholm 2 und in ihrem unteren Bereich unter anderem durch die sogenannte Bodengruppe 3 miteinander verbunden sind. In diese Bodengruppe 3 ist ein Kardantunnel 4 eingearbeitet.

Vorgesehen ist ferner ein auch als Tragrohr bezeichneter Lenksäulen-Träger 5, der an den beiden A-Säulen angebunden ist und der üblicherweise unterhalb des sogenannten Windlaufs (nicht gezeigt) vorgesehen ist. An diesem Lenksäulen-Träger 5 wird üblicherweise auch die Lenksäule (nicht gezeigt) des Personenkraftwagens befestigt. Ferner können vom Lenksäulen-Träger 5 Versteifungsholme 6 zum Kardantunnel 4 führen.

Der Lenksäulen-Träger 5 ist hohl ausgebildet, das heißt er weist einen Hohlraum 7 auf, in den erfindungsgemäß jeweils im Bereich der beiden Endabschnitte 5' jeweils ein Gasgenerator 8 für jeweils einen nicht gezeigten Seitenairbag (linksseitig und rechtsseitig) eingesteckt ist. Über Gasleitungen 9 ist jeder Gasgenerator 8 mit dem ihm zugeordneten nicht gezeigten Seitenairbag, der sich im Bereich eines vom oberen Abschnitt der A-Säule 1 nach hinten führenden Dachholmes befindet, verbunden. Vorgesehen, jedoch ebenfalls nicht dargestellt sind ferner Steuerleitungen, die im Bedarfsfall für eine Auslösung des Gasgenerators 8 sorgen.

Wie bereits erwähnt sind die Gasgeneratoren 8 einfach montierbar, indem diese vor der Verschraubung des Lenksäulen-Trägers 5 mit den beiden A-Säulen 1 in die Hohlräume 7 in den Endabschnitten 5' eingesteckt werden. Bei geeigneter Anpassung der Abmessungen dieser Endabschnitte 5' sowie der Gasgeneratoren 8 ist ferner kein separates Halteteil erforderlich, vielmehr werden die Gasgeneratoren 8 gehaltert und geschützt, das heißt ummantelt durch den Lenksäulen-Träger 5 selbst. Insbesondere ist jeder Gasgenerator 8 durch diese Anordnung im Hohlraum 7 des Lenksäulen-Trägers 5 auch bei einer Auslösung sicher fixiert. Femer kann kein benachbartes Bauteil durch die Wärmeentwicklung, die sich bei Auslösung eines Gasgenerators 8 einstellt, geschädigt werden. Aufgrund dieser Vorteile sowie der räumlichen Trennung unterscheidet sich die vorgeschlagene Anordnung doch in erfinderischer Weise von dem nur noch der Vollständigkeit halber genannten Stand der Technik nach der DE 36 11 486 A1, welche eine komplette Airbag-Einheit zeigt, die zumindest teilweise innerhalb eines Lenksäulen-Trägers angeordnet ist.

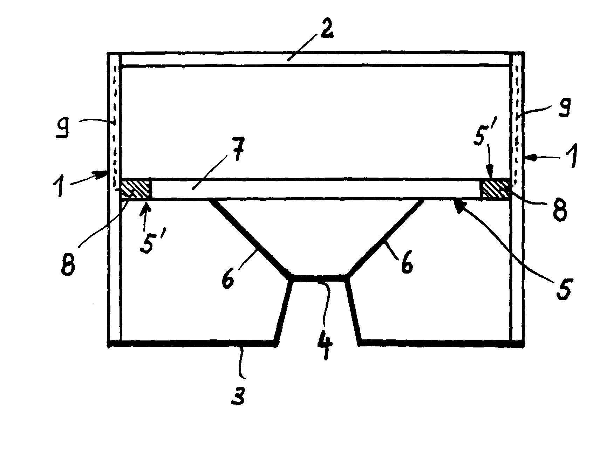

## Patentansprüche

1. Anordnung eines Gasgenerators (8) für einen Fahrzeug-Seitenairbag in einem Hohlraum (7) eines Trägers des beidseitig eine A-Säule (1) aufweisenden Fahrzeuges,
dadurch gekennzeichnet, daß der Gasgenerator (8) innerhalb des an den beiden A-Säulen (1) angebundenen Lenksäulen-Trägers (5) angeordnet ist.

2. Anordnung nach Anspruch 1,
dadurch gekennzeichnet, daß jeweils ein Gasgenerator (8) vor der Montage des Lenksäulen-Trägers (5) in dessen offene Endabschnitte (5') eingebracht wird.

3. Anordnung nach Anspruch 1 oder 2,
dadurch gekennzeichnet, daß der Endabschnitt (5') des Lenksäulen-Trägers (5) sowie der Gasgenerator (8) in ihrem Abmessungen aneinander angepaßt sind.

## Claims

1. A gas generator (8) for a side airbag in a vehicle, disposed in a cavity (7) of a holder in the vehicle, which has an A-column (1) on each side,
characterised in that the gas generator (8) is disposed inside the steering-column holder (5), which is connected to the two A-columns (1).

2. An arrangement according to claim 1,
characterised in that each gas generator (8) is inserted into the open end portions (5) of the steering-column holder (5) before installation thereof.

3. An arrangement according to claim 1 or 2,
characterised in that the end portion (5') of the steering-column holder (5) is adapted to the dimensions of the gas generator (8).

## Revendications

1. Agencement d'un générateur de gaz (8) pour un coussin d'air latéral de véhicule dans une cavité (7) d'un support de véhicule présentant des deux côtés une colonne A (1),
caractérisé en ce que
le générateur de gaz (8) est disposé à l'intérieur du support (5) de la colonne de direction, relié aux deux colonnes A (1).

2. Agencement selon la revendication 1,
caractérisé en ce que
respectivement un générateur de gaz (8) est monté avant le montage du support (5) de la colonne de direction, dans sa section terminale ouverte (5').

3. Agencement selon la revendication 1 ou 2,
caractérisé en ce que
la section terminale (5') du support (5) de la colonne de direction ainsi que le générateur de gaz (8) ont des dimensions adaptées les unes aux autres.
